# EUROPEAN PATENT APPLICATION

(11) **EP 4 568 403 A1**
(43) Date of publication of application: **11.06.2025**
(21) Application number: 23850323.9
(22) Date of filing: 25.07.2023
(51) Int. Cl.: H04W 74/08, H04W 76/14, H04W 76/18, H04W 24/08, H04W 4/40, H04W 92/18

(54) **SIDELINK COMMUNICATION FAILURE PROCESSING METHOD AND DEVICE THEREFOR**

(30) Priority: 01.08.2022 KR 20220095660; 19.07.2023 KR 20230094081
(71) Applicant: KT Corporation, Seongnam-si, Gyeonggi-do 13606 (KR)
(72) Inventor: HONG, Sung Pyo, Seongnam-si, Gyeonggi-do 13606 (KR)
(74) Representative: Brevalex
(86) International application number: PCT/KR2023/010770
(87) International publication number: WO 2024/029817

(57) **Abstract**

Provided are a device and a method for performing sidelink communication in an unlicensed band. The method of a user equipment may include configuring a parameter for detecting a sidelink-specific consistent listen before talk (LBT) failure; detecting a sidelink-specific consistent LBT failure by using the parameter; and transmitting the sidelink-specific consistent LBT failure to a base station.

## Description

### TECHNICAL FIELD

The disclosure relates to a technology for sidelink communication failure processing.

### BACKGROUND ART

There is a growing demand for high-capacity data processing, high-speed data processing, and a variety of services using wireless user equipment (or terminals) in vehicles, industrial sites, and the like. Accordingly, there is an increasing demand for technology for high-speed and high-capacity telecommunications systems that have evolved beyond voice-centric services and are able to process a variety of scenarios and high-capacity data, such as images, wireless data, machine-type communication data, and the like.

In this regard, the ITU radiocommunication sector (ITU-R) discloses requirements for the adaptation of international mobile telecommunications-2020 (IMT-2020) standards. Extensive research into next-generation wireless communications technology for meeting IMT-2020 requirements is underway.

In particular, in the 3rd Generation Partnership Project (3GPP), research into LTE-Advanced Pro Rel-15/16 standards and new radio access technology (NR) standards is underway to meet IMT-2020 requirements, commonly referred to as 5G technology requirements. The two standard technologies are planned to be approved as next-generation wireless communication technologies.

5G technology may be applied to and used in autonomous vehicles. In this regard, 5G technology needs to be applied to sidelink communications, such as, vehicle-to-everything (V2X) communications. For autonomous driving, it is necessary to transmit and receive an increasing volume of data at high speeds with high reliability.

In addition, research is underway into unlicensed band communications, in which each operator conducts communications over public bands rather than a dedicated frequency band allocated by the government. In unlicensed band communications, it is necessary to determine channel occupancy in advance of use. Accordingly, unlicensed band communications are different from licensed band communications that operate under the control of radio resources managed by typical base stations.

More recently, technologies for performing sidelink communications over unlicensed bands are being investigated. Such technologies may require different processing methods and procedures compared to typical operations of performing sidelink communications over licensed bands. In particular, there is demand for research into how to process sidelink communication when the channel in the unlicensed band is unoccupied .

### DISCLOSURE

### Technical Problem

Accordingly, the disclosure proposes a method and device for processing a sidelink communication failure.

### Technical Solution

According to an aspect, the disclosure provides a sidelink communication method over an unlicensed band by user equipment. The method may include: configuring parameters for sidelink-specific consistent listen-before-talk (LBT) failure detection; detecting a sidelink-specific consistent LBT failure using the parameters; and transmitting the sidelink-specific consistent LBT failure to a base station.

According to another aspect, is the disclosure provides a sidelink communication method over an unlicensed band by a base station. The sidelink communication method may include: transmitting parameters for sidelink-specific consistent LBT failure detection to user equipment; and receiving a sidelink-specific consistent LBT failure detected using the parameters from the user equipment.

According to another aspect, the disclosure provides a user equipment (UE) performing sidelink communications over an unlicensed band. The user equipment may include a controller for configuring parameters for sidelink specific consistent LBT failure detection, and detecting a sidelink-specific consistent LBT failure using the parameters, and a transmitter for tmasmitting the sidelink-specific consistent LBT failure to a base station.

According to another aspect, is the disclosure provides a base station performing sidelink communications over an unlicensed band. The base station may include: a transmitter configured to transmit parameters for sidelink-specific consistent LBT failure detection to user equipment; and a receiver configured to receive a sidelink-specific consistent LBT failure detected using the parameters from the user equipment.

### Advantageous Effects

According to embodiments, a sidelink communication failure may be processed.

### DESCRIPTION OF DRAWINGS

FIG. 1 is a diagram schematically illustrating a structure of an NR wireless communication system.
FIG. 2 is a diagram illustrating a frame structure in the NR system.
FIG. 3 is a diagram illustrating a resource grid supported by radio access technology.
FIG. 4 is a diagram illustrating a BWP supported by radio access technology.
FIG. 5 is a diagram illustrating an example of a synchronization signal block in radio access technology.
FIG. 6 is a diagram illustrating a random access procedure in radio access technology.
FIG. 7 is a diagram illustrating a CORESET.
FIG. 8 is a flowchart illustrating the operation of user equipment according to an embodiment.
FIG. 9 is a flowchart illustrating the operation of user equipment according to another embodiment.
FIG. 10 is a flowchart illustrating the operation of a base station according to an embodiment.
FIG. 11 is a block diagram illustrating user equipment according to an embodiment.
FIG. 12 is a block diagram illustrating a base station according to an embodiment.

### BEST MODE

Hereinafter, embodiments of the disclosure will be described in detail with reference to the accompanying drawings. In designating elements of the drawings by reference numerals, the same elements will be designated by the same reference numerals even if they are shown in different drawings. Furthermore, in describing embodiments of the disclosure, a detailed description of related known configurations or functions may be omitted when doing so ensures that the main technical idea of the disclosure is not obscured. It will be understood that the terms "comprise", "include", "have", and any variations thereof used herein are intended to cover non-exclusive inclusions unless explicitly stated to the contrary. Descriptions of elements in the singular form used herein are intended to include descriptions of elements in the plural form, unless explicitly stated to the contrary.

Furthermore, terms, such as first, second, A, B, (a), or (b), may be used herein when describing elements of the disclosure. Each of these terms is not used to define the essence, order, sequence, or number of corresponding elements but is used merely to distinguish the corresponding elements from other elements.

In describing the positional relationship between elements, it will be understood that when two or more elements are referred to as being "connected", "coupled", or "joined" to each other, the elements may not only be "directly connected, coupled, or joined" to each other, but the elements may also be "indirectly connected, coupled, or joined" to each other via an "intervening" element. Here, the intervening element may be included in at least one of the two or more elements "connected", "coupled", or "joined" to each other.

In describing temporal flow relationships with respect to elements, methods of operation, or methods of production, for example, when a temporal antecedent or flow antecedent relationship, such as "after," "following," "next to," or "before," is described, non-continuous cases may also be included unless "immediately" or "directly" is used.

In addition, when numerical values for elements or corresponding information (e.g., level) are stated, the numerical values or information should be interpreted as including a tolerance or error range which may be caused by various factors (e.g., process factors, internal or external impacts, or noise) even if not explicitly stated otherwise.

The term "wireless communications system" used herein may refer to a system providing a range of communication services, including voice and packet data, using radio (or wireless) resources, and may include user equipment (UE), a base station, a core network, or the like.

Embodiments disclosed hereinafter may be used in wireless communications systems using a range of radio (or wireless) access technologies. For example, embodiments may be used in a range of radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Furthermore, radio access technologies may mean not only particular access technologies but also communications technologies according to the generation, established by a variety of communications consultative organizations, such as the 3^{rd} generation partnership project (3GPP), the 3^{rd} generation partnership project 2 (3GPP2), the Wi-Fi alliance, the Bluetooth, the institute of electrical and electronics engineers (IEEE), and the international telecommunication union (ITU). For example, CDMA may be realized by a wireless technology, such as universal terrestrial radio access (UTRA) or CDMA2000. TDMA may be realized by a wireless technology, such as the global system for mobile communications (GSM), general packet radio service (GPRS), or enhanced data rates for GSM evolution (EDGE). OFDMA may be realized by a wireless technology, such as IEEE 802.11 (Wi-Fi), IEEE 802.16 (WiMAX), IEEE 802-20, or evolved-UMTS terrestrial radio access (E-UTRA). IEEE 802.16m, evolved from IEEE 802.16e, provides backward compatibility with systems based on IEEE 802.16e. UTRA is a portion of universal mobile telecommunications system (UMTS). 3rd generation partnership project (3GPP) long term evolution (LTE) is a portion of evolved UMTS (E-UMTS) using E-UTRA, and uses OFDMA in downlinks and SC-FDMA in uplinks. In this manner, embodiments of the disclosure may be used in radio access technologies which are currently disclosed or commercially available, or may be used in any radio access technology which are currently being, or will be, developed.

In addition, the term "user equipment (UE)" used herein should be interpreted as being a comprehensive term referring to a wireless communications module which communicates with a base station in a wireless communications system, and should be interpreted as including not only user equipment in wideband code division multiple access (WCDMA), LTE, new radio access technology (NR), HSPA, international mobile telecommunications-2020 (IMT-2020; 5G or New Radio), and the like, but also all of a mobile station (MS), a user terminal (UT), a subscriber station (SS), a wireless device, and the like, used in GSM. The user equipment may refer to a mobile user device, such as a smartphone, depending on the type of use or may refer to a vehicle, a device including a wireless communications module in the vehicle, or similar devices within in the vehicle-to-everything (V2X) communications system. Furthermore, in the machine type communications (MTC) system, the user equipment may refer to MTC user equipment, machine-to-machine (M2M) user equipment, ultra-reliability and low latency communications (URLLC) user equipment, or similar equipment equipped with a communication module capable of supporting machine-type communications.

The term "base station" or "cell" used herein refers to an end in a network, communicating with the user equipment, and comprehensively refers to a variety of coverage areas, such as a node-B, an evolved node-B (eNB), a gNodeB (gNB), a low power node (LPN), a sector, a site, an antenna having a variety of shapes, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), and a small cell. The cell may also be understood as including a bandwidth part (BWP) in a frequency domain. For example, a serving cell may refer to an activation BWP of the user equipment.

Because at least one of the various cells is controlled by a dedicated base station, the base station may be interpreted in two senses. Each of the base stations may be i) a device which provides a megacell, a macrocell, a microcell, a picocell, a femtocell, or a small cell in relation to a wireless communication area, or2) the wireless communication area itself. In 1), the base station may be apparatuses providing wireless areas, which are controlled by the same entity or interact with one another to form a wireless area in a coordinated manner. According to the configuration of the wireless area, the point, the transmission/reception point, the transmission point, the reception point, and the like are examples of the base station. In 2), the base station may be the wireless area itself in which a signal is received from or transmitted to the perspective of a user or a neighboring base station.

In the disclosure, the term "cell" may refer to a coverage of a signal transmitted from the transmission point or the transmission/reception point, a component carrier having the coverage of the signal transmitted from the transmission point or the transmission/reception point, or the transmission point or the transmission/reception point itself.

The term "uplink (UL)" refers to a data transmission/reception scheme of transmitting/receiving data from the user equipment to the base station. The term "downlink (DL)" refers to a data transmission/reception scheme of transmitting/receiving data from the base station to the user equipment. The downlink may refer to communications or a communication path from a multiple transmission/reception point to the user equipment. The uplink may refer to communications or a communication path from the user equipment to the multiple transmission/reception point. In the downlink, a transmitter may be the multiple transmission/reception point, and a receiver may be the user equipment. Furthermore, in the uplink, the transmitter may be the user equipment, and the receiver may be the multiple transmission/reception point.

The uplink and the downlink transmit and receive control information via a control channel, such as a physical downlink control channel (PDCCH) or a physical uplink control channel (PUCCH), and the uplink and the downlink transmit and receive data via a data channel, such as a physical downlink shared channel (PDSCH) or a physical uplink shared channel (PUSCH). In the disclosure, "transmitting or receiving a signal via a channel, such as the PUCCH, the PUSCH, the PDCCH, or the PDSCH," may also be referred to as "transmitting or receiving the PUCCH, PUSCH, PDCCH, or PDSCH".

To clarify the description, the principle of the disclosure will be described with respect to a 3GPP LTE/LTE-A/NR (New RAT) communications system, but the technical features of the disclosure are not limited to the communications system.

In 3GPP, 5th generation (5G) communications technology is being developed to meet the next generation radio access technology requirements of the international telecommunication union radio-communication sector (ITU-R) after 4th generation (4G) communications technology. Specifically, in 3GPP, research on new NR communications technology distinct from LTE advanced Pro (LTE-A Pro) and 4G telecommunications technology evolved from LTE Advanced in accordance with the ITU-R requirements is being developed as 5G communications technology. Both LTE-A Pro and NR refer to 5G communications technology, and 5G communications technology will be described with respect to NR in the following, except where a particular communications technology is specified.

In NR, a variety of operation scenarios are defined by adding considerations about satellites, vehicles, new vertical services, and the like to typical 4G LTE scenarios. In terms of services, an enhanced mobile broadband (eMBB) scenario, a massive machine communication (MMTC) scenario having high user equipment density, deployed over a wide range, and requiring low data rates and asynchronous accesses, and an ultra-reliability and low latency communications (URLLC) scenario requiring high responsiveness and reliability and capable of supporting high-speed mobility are supported.

To meet the scenario described above, NR discloses a wireless communications system using technologies that provide a new waveform and frame structure, enable low latency, support ultrahigh frequency waves (mmWave), and ensure forward compatibility. In particular, the NR system presents various technical changes to enhance flexibility in order to provide forward compatibility. Major technical features of NR will be described below with reference to the accompanying drawings.

### <General of NR System>

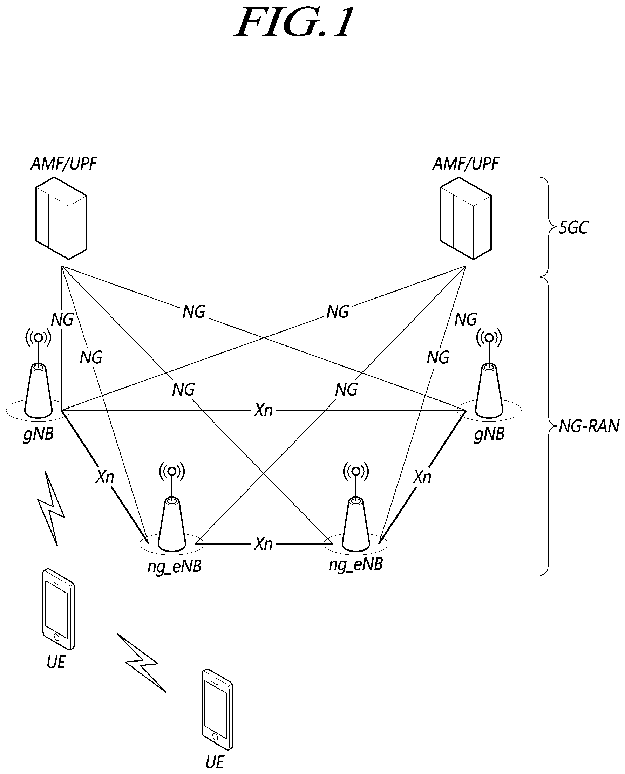

FIG. 1 is a diagram schematically illustrating a structure of an NR system.

Referring to FIG. 1, the NR system is divided into a 5G core network (5GC) part and an NR-RAN part. The NG-RAN includes gNBs and ng-eNBs, providing a control plane (or a radio resource control (RRC)) protocol endpoint of a user plane (SDAP/PDCP/RLC/MAC/PHY) and user equipment (UE). The gNBs are connected to each other, or the gNBs and the ng-eNBs are connected to each other via an Xn interface. The gNBs and the ng-eNBs are connected to each other to the 5GC via an NG interface. The 5GC may include i) an access and mobility management function (AMF) managing a control plane, such as terminal access and mobility control functions and ii) a user plane function (UPF) managing a control function over user data. The NR system includes support for both a frequency range of 6GHz or lower, for example, frequency range 1 (FR1), and a frequency range of 6GHz or higher, for example, frequency range 2 (FR2).

The gNBs refer to base stations that provide the NR user plane and control plane protocol endpoint to the user equipment. The ng-eNBs refer to base stations that provide E-UTRA user plane and control plane protocol endpoint to the user equipment. The term "base station" should be understood as comprehensively referring to the gNB and the ng-eNB, or the term "base station" may be used as distinctively referring to the gNB or the ng-eNB as desired.

### <NR Waveform, Numerology, and Frame Structure>

NR uses cyclic prefix orthogonal frequency-division multiplexing (CP-OFDM) waveforms using the cyclic prefix (CP) for downlink transmissions and CP-OFDM or discrete Fourier transform spread (DFT-s)-OFDM for uplink transmissions. OFDM technology has the advantages of being able to easily combine with a multiple-input multiple-output (MIMO) method, achieve high frequency efficiency, and use a low-complexity receiver.

In addition, NR has different requirements for data rate, latency, coverage, and the like according to the three scenarios above-described. Thus, it is requested to efficiently meet the requirements according to the scenarios through frequency ranges of the NR system. In this regard, a technology for efficiently multiplexing a plurality of different numerology-based radio resources has been proposed.

Specifically, NR transmission numerology is determined based on the subcarrier spacing and the CP. µ values are used as exponential values of 2 based on 15 kHz and are exponentially changed, as illustrated in Table 1 below.

**[Table 1]**

| µ | Subcarrier Spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

As illustrated in Table 1 above, the numerology of NR may be divided into five types according to the subcarrier spacing. This differs from the subcarrier spacing of LTE, 4G communications technology, which is fixed to 15 kHz. Specifically, in NR, the subcarrier spacings used for data transmissions are 15, 30, 60, and 120 kHz, and the subcarrier spacings used for synchronous signal transmissions are 15, 30, 120, and 240 kHz. Furthermore, an extended CP is only applied to 60 kHz subcarrier spacing. In addition, the frame structure in NR is defined as a frame having a length of 10 ms, comprised of 10 subframes, each having the same lengths of 1 ms. A single frame may be divided into 5 ms half frames, each of which includes five subframes. In the case of 15 kHz subcarrier spacing, a single subframe includes a single slot, and each slot includes fourteen (14) OFDM symbols.

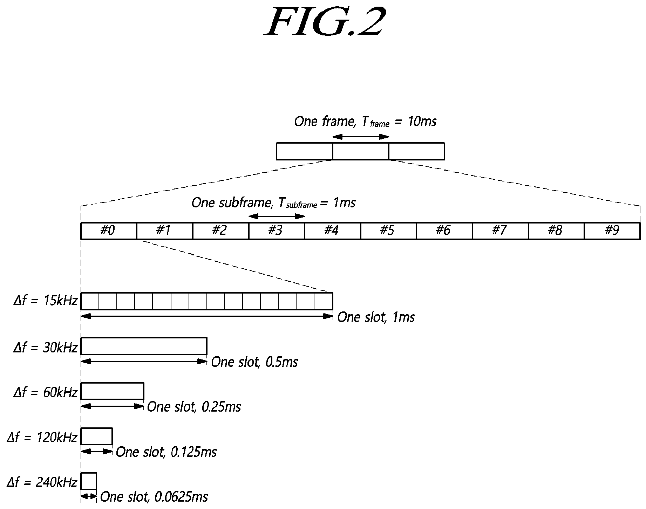

FIG. 2 is a diagram illustrating a frame structure in the NR system.

Referring to FIG. 2, the slot is constantly comprised of 14 OFDM symbols in the case of a normal CP, but the length of the slot in the time domain may vary depending on the subcarrier spacing. As an example, if the numerology has the 15 kHz subcarrier spacing, the length of the slot is 1 ms, equal to that of the subframe. As another example, if the numerology has the 30 kHz subcarrier spacing, the slot may be comprised of 14 OFDM symbols and have 0.5 ms length, such that two slots may be included in a single subframe. That is, each of the subframe and the frame is defined as having a fixed time length, and the slot may be defined by the number of symbols, such that the time length may vary depending on the subcarrier spacing.

In NR, the slot is defined as a basic unit of the scheduling, and a mini-slot (or a sub-slot or a non-slot based schedule) is also introduced to reduce a transmission delay in a wireless section. If a wide subcarrier spacing is used, the length of a single slot is shortened in inverse proportion thereto, and thus the transmission delay in the wireless section may be reduced. The mini-slot (or sub-slot) is devised to efficiently support URLLC scenarios and scheduling based on 2, 4, or 7 symbols may be possible.

Furthermore, unlike LTE, NR defines uplink and downlink resource allocations as symbol levels at a single slot. To reduce hybrid automatic repeat request (HARQ) latency, a slot structure able to directly transmit an HARQ acknowledgement/negative acknowledgement (ACK/NACK) in a transmission slot is defined. This slot structure will be named and described as a self-contained structure.

NR is designed to support a total of 256 slot formats, 62 of which are used in 3GPP Rel-15. In addition, various slot combinations support a common frame structure including an FDD or TDD frame. For example, NR supports a slot structure in which all symbols of the slot are configured as downlinks, a slot structure in which all symbols of the slot are configured as uplinks, and a slot structure in which downlink symbols and uplink symbols are combined. Furthermore, NR supports a form of scheduling in which data transmission is distributed across one or more slots. Accordingly, the base station may inform the user equipment of whether or not a corresponding slot is a downlink slot, an uplink slot, or a flexible slot using a slot format indicator (SFI). The base station may direct a slot format by directing an index of a table, configured by user equipment-specific RRC signaling using the SFI, dynamically using downlink control information (DCI) or statically or quasi-statically through the RRC.

### <NR Physical Resource>

Regarding the physical resources in NR, antenna ports, resource grids, resource elements (RE), resource blocks, bandwidth parts (BWPs), and the like are considered.

The antenna port is defined to infer a channel carrying a symbol on an antenna port from a channel carrying another symbol on the same antenna port. If the large-scale property of a channel carrying the symbol on an antenna port is inferable from a channel carrying a symbol on another antenna port, the two antenna ports may be in a quasi co-located or quasi co-location (QC/QCL) relationship. Here, the large-scale property includes at least one of a delay spread, a Doppler spread, a frequency shift, average received power or received timing.

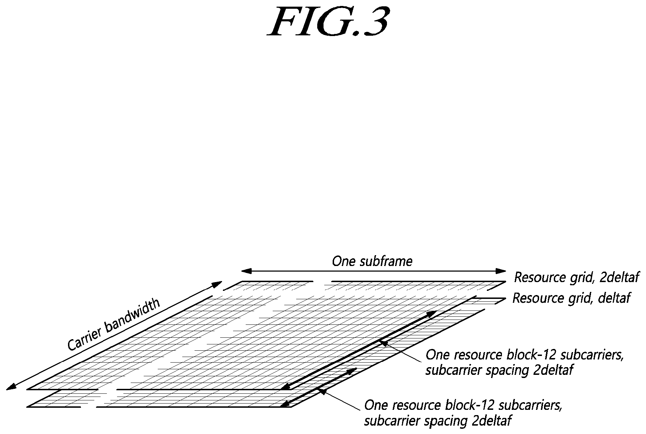

FIG. 3 is a diagram illustrating a resource grid supported by radio access technology.

Referring to FIG. 3, since NR supports a plurality of numerologies within the same carrier, the resource grid may be configured according to each numerology. Furthermore, the resource grid may be configured depending on the antenna port, the subcarrier spacing, and the transmission direction.

A resource block is comprised of 12 subcarriers and is only defined in a frequency domain. Furthermore, a resource element is comprised of a single OFDM symbol and a single subcarrier. Therefore, as shown in FIG. 3, the size of a single resource block may vary depending on the subcarrier spacing. Furthermore, NR defines "point A", a common resource block, a virtual resource block, and the like, where the "point A" serves as a common reference point for resource block grids.

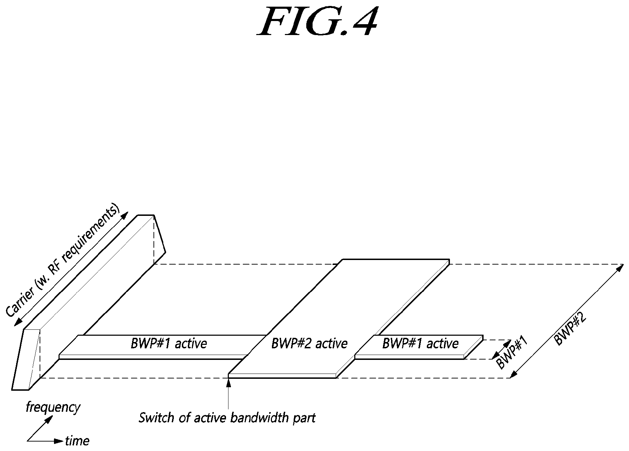

FIG. 4 is a diagram illustrating a BWP supported by radio access technology.

In NR, a maximum carrier bandwidth is established to be in the range from 50 MHz to 400 MHz depending on the subcarrier spacing, unlike in LTE where the carrier bandwidth thereof is fixed to 20 MHz. Therefore, it is not assumed that all user equipment uses all of these carrier bandwidths. Accordingly, as illustrated in FIG. 4, in NR, a bandwidth part (BWP) may be designated within a carrier bandwidth to be used by the user equipment. Furthermore, the BWP may be associated with a single numerology, be comprised of a contiguous subset of the common resource blocks and be dynamically activated over time. The user equipment is provided with up to four BWPs in each of an uplink and a downlink, and transmits and receives data using an activated BWP at a given time.

For a paired spectrum, uplink and downlink BWPs are configured independently. For an unpaired spectrum, an uplink BWP and a downlink BWP are configured in a pair, allowing the center frequency to be shared between them, thereby preventing unnecessary frequency re-tuning between downlink and uplink operations.

### <Initial NR Access>

In NR, the user equipment performs cell search and random access procedures to access a base station and establish communications with the base station.

The cell search procedure involves synchronizing the user equipment with the cell of a corresponding base station via a synchronization signal block (SSB) transmitted from the base station, acquiring a physical layer cell identifier (ID), and retrieving system information.

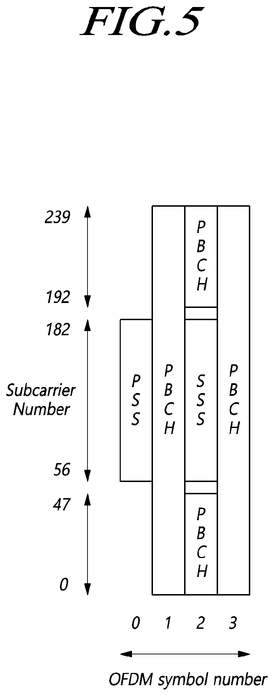

FIG. 5 is a diagram illustrating an example of a synchronization signal block in radio access technology.

Referring to FIG. 5, an SSB includes a primary synchronization signal (PSS) and a secondary synchronization signal (SSS), each of which occupies a single symbol and 127 subcarriers, as well as a physical broadcast channel (PBCH) that spans three OFDM symbols and 240 subcarriers.

The user equipment receives the SSB by monitoring the SSB in time and frequency domains.

The SSB may be transmitted up to 64 times within 5 ms. A plurality of SSBs are transmitted on different transmission beams within a period of 5 ms, and the user equipment performs detection under the assumption that an SSB is transmitted at every 20 ms, based on a single beam used for transmission. The number of beams which may be used for the SSB transmission within the 5 ms period may increase with increases in the frequency range. For example, up to four SSB beams may be transmitted in a frequency range of 3 GHz or lower. The SSB may be transmitted using up to eight beams in a frequency range of 3 to 6 GHz and up to 64 different beams in a frequency range of 6 GHz or higher.

Two SSBs are contained in a single slot, and the start symbol and the number of repetitions within the slot are determined based on the subcarrier spacing as will be described later.

In addition, unlike an synchronization signal (SS) of typical LTE, the synchronization signal block (SSB) is not transmitted on the center frequency of a carrier bandwidth. That is, the synchronization signal block (SSB) may be transmitted at a frequency offset from the center frequency of a system range, and multiple SSBs may be transmitted across a frequency domain if a wideband operation is supported. Therefore, the user equipment monitors the synchronization signal blocks (SSBs) using a synchronization raster which is a candidate frequency position for the monitoring of the SSBs. A carrier raster and a synchronous raster, which are center frequency position information of a channel for initial access, are newly defined in NR. The synchronous raster may be established to have a wider frequency interval than the carrier raster, and thus, may support the user equipment for fast SSB search.

The user equipment may acquire a master information block (MIB) through the PBCH of the SSB. The MIB includes minimum information required for the user equipment receives remaining minimum system information (RMSI) broadcast by the network. Furthermore, the PBCH may include information indicating the position of a first demodulation reference signal (DM-RS) symbol in the time domain, information enabling the user equipment to monitor system information block 1 (SIB1) (e.g., SIB1 numerology information, information about an SIB1 control resource set (CORESET), search space information, or PDCCH related parameter information), information about an offset between the common resource block and the SSB (in which the absolute position of the SSB in the carrier is transmitted via the SIB1), and the like. Here, the SIB1 numerology information is uniformly applied to some messages used in the random access procedure for accessing the base station after the user equipment completes the cell search procedure. Specifically, the SIB1 numerology information may be applied to at least one of messages 1 to 4 for the random access procedure.

The above-described RMSI may corresponds to system information block 1 (SIB1), which is broadcast periodically (e.g., at 160 ms) in the cell. SIB1 includes information necessary for the user equipment to perform an initial random access procedure and is periodically transmitted through the PDSCH. For the user equipment to receive SIB1, the user equipment is requested to receive i) numerology information used for SIB1 transmission and ii) control resource set (CORESET) information used for SIB1 scheduling, through the PBCH. The user equipment checks scheduling information about SIB1 using a system information radio network temporary identifier (SI-RNTI) in the CORESET and acquires SIB1 on the PDSCH according to the scheduling information. The remaining SIBs other than SIB1 may be transmitted periodically or at the request of the user equipment.

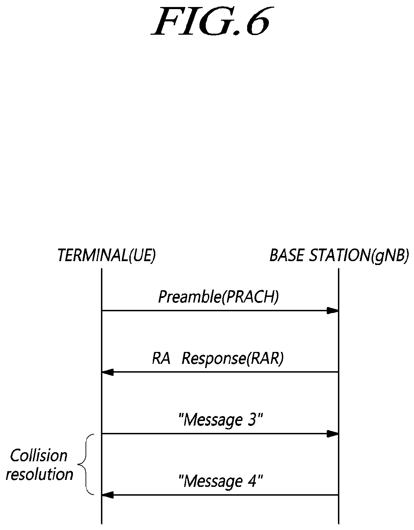

FIG. 6 is a diagram illustrating a random access procedure in radio access technology.

Referring to FIG. 6, when cell search is completed, the user equipment transmits a random access preamble for random access to the base station. The random access preamble is transmitted through a physical random access channel (PRACH). Specifically, the random access preamble is transmitted to the base station through the PRACH, comprised of consecutive radio resources in a selected slot periodically repeated. Typically, a contention-based random access procedure is performed when user equipment initially accesses a cell, whereas a non-contention based random access procedure is performed in when random access is performed for beam failure recovery (BFR).

The user equipment receives a random access response to the transmitted random access preamble. The random access response may include a random access preamble identifier (ID), an uplink (UL) radio resource grant, a temporary cell radio network temporary ID (temporary C-RNTI), and a time alignment command (TAC). Because a single random access response may include random access response information about at least one user equipment, the random access preamble ID may be included to illustrate for which user equipment the included UL grant, the temporary C-RNTI, and the TAC are valid. The random access preamble ID may be an ID of the random access preamble which the base station has received. The TAC may be included as information used by the user equipment to adjust uplink synchronization. The random access response may be identified by a random access ID on the PDCCH, specifically, a random access-radio network temporary ID (RA-RNTI).

Upon receiving the valid random access response, the user equipment processes information included in the random access response and performs a scheduled transmission to the base station. For example, the user equipment applies the TAC and stores the temporary C-RNTI. Additionally, data stored in a buffer of the user equipment or newly generated data is transmitted to the base station using the UL grant. In such cases, it is preferable to include information that may identify the user equipment.

Finally, the RA-RNTI receives a downlink message for contention resolution.

### <NR CORESET>

In NR, a downlink control channel is transmitted on a control resource set (CORESET) having a length of between 1 to 3 symbols. Up/down scheduling information, slot format index (SFI) information, and transmit power control (TPC) information, among other details, are transmitted through the downlink control channel.

In NR, to secure the flexibility of the system as described above, the concept of CORESET is introduced. The CORESET refers to a time-frequency resource for a downlink control signal. The user equipment may decode a control channel candidate using one or more search spaces in a CORESET time-frequency resource. CORESET-specific quasi colocation (QCL) assumption is established. In addition to characteristics assumed by related-art QCL, such as delay spread, a Doppler spread, a Doppler shift, or an average delay, the QCL assumption is used to inform the characteristics of analogue beam directions.

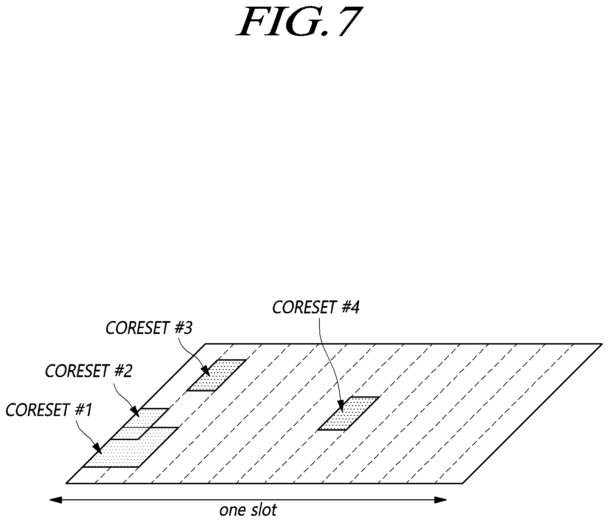

FIG. 7 is a diagram illustrating a CORESET.

Referring to FIG. 7, the CORESET may have a variety of forms within a carrier bandwidth in a single slot. The CORESET may be comprised of up to three OFDM symbols in the time domain. In addition, the CORESET is defined as a multiple of six resource blocks and extends up to the carrier bandwidth in the frequency domain.

The first CORESET is a portion of an initial BWP configuration and is indicated by the MIB to enable the UE to receive additional configuration information and system information from the network. After a connection to the base station is established, the user equipment may receive and configure one or more pieces of CORESET information by RRC signaling.

Herein, the frequency, the frame, the subframe, the resource, the resource block, the region, the band, the sub-band, the control channel, the data channel, the synchronization signal, various reference signals, various signals, or various messages, related to new radio (NR) access technology, may be interpreted as having a variety of meanings that encompass concepts used in the past, present, or future.

Herein, the frequency, the frame, the subframe, the resource, the resource block, the region, the band, the sub-band, the control channel, the data channel, the synchronization signal, various reference signals, various signals, or various messages, related to new radio (NR) access technology, may be interpreted as having a variety of meanings that reflect concepts used in the past, present, or future.

### Access to Shared Spectrum

NR radio access operating with shared spectrum channel access over unlicensed bands may operate in different modes in which PCells, PSCells, or SCells may be in the shared spectrum. Before performing a transmission on a cell configured to have shared spectrum channel access, the base station and user equipment may need to apply the listen-before-talk (LBT) procedure. When the LBT procedure is applied, the transmitter listens to or senses the channel to determine whether the channel is free or busy and transmits only when the channel is sensed as free.

### NR Sidelink

Rel-16 sidelink communications were developed primarily for radio access technologies designed to support advanced V2X applications. In Rel-17, the 3GPP SA2 working group initiated and standardized proximity-based services including public disaster and commercial services. While NR sidelinks were developed initially for early V2X applications, there is strong interest in the industry to extend their use to commercial use cases. Commercial sidelink applications require increased sidelink data rates and support for new sidelink carrier frequencies. Increased sidelink data rates may be required for applications such as sharing sensor information (e.g., video) between vehicles featuring high levels of driving automation. Higher data rates may be achieved through sidelink carrier merging and sidelink communications over unlicensed band frequencies. If unlicensed frequencies are supported on the sidelink, sidelink communications may be better positioned for implementation in commercial devices. However, no specific technical specifications are available even technologies for using sidelinks in unlicensed shared spectrum are required.

The related art has not provided technologies that support sidelink communications over unlicensed shared frequencies. The disclosure proposes a method and device for effectively performing sidelink communications over unlicensed shared frequencies. In particular, the disclosure proposes a method and device for processing a consistent LBT failure.

For ease of explanation, the following description will focus on sidelink control methods based on 5GS/NR technology. However, this is for illustrative purposes only, and embodiments may be applied to any system/radio access technology (e.g., LTE or 6G). Thees embodiments include the information elements and operation details specified in the NR/5GS specifications (e.g., TS 38.321 for MAC specifications and TS 38.331 for NR RRC specifications). Even if this specification does not include the contents of user equipment operation associated with the definition of the corresponding information elements, the corresponding contents specified in the published standard specification may be included in the embodiments.

The embodiments provided below may be applied to sidelink communications between NR user equipment and NR user equipment via an NR base station. The embodiments below may also be applied to sidelink communications between NR user equipment and LTE user equipment (or any inter-RAT user equipment) via an NR base station. The embodiments provided below may also be applied to sidelink communications between LTE user equipment and LTE user equipment via an NR base station. The embodiments provided below may also be applied to sidelink communications between LTE user equipment and LTE user equipment via an LTE base station (or another inter-RAT base station). The embodiments provided below may also be applied to sidelink communication between LTE user equipment and NR user equipment via an LTE base station. The embodiments provided below may also be applied to sidelink communication between NR user equipment and NR user equipment via an LTE base station.

Any functionality described below may be defined as an individual user equipment capability (e.g., user equipment radio capability or user equipment core network capability) and transmitted by the user equipment to the base station, a core network entity (e.g., AMF/SMF), and/or to counterpart user equipment via corresponding signaling. Alternatively, any functionalities may be combined/unified and defined as a corresponding user equipment capability to be transmitted by the user equipment to the base station, a core network entity, and/or to counterpart user equipment via corresponding signaling. For any of the functionalities or any combination of functionalities described below, the base station may transmit and/or direct information to the user equipment, via an RRC message, indicating the functionality and/or combination of functionalities to be allowed, supported, and/or configured. For example, prior to, after, or during the configuration and/or application of the functionality and/or combination of functionalities, the information may be directed to the user equipment. It will be appreciated that the features described below may be performed in any combination/unification, which fall within the scope of the disclosure. For example, one or more of the features may be applied simultaneously.

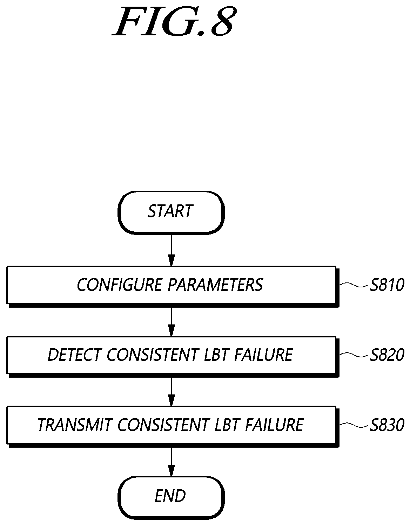

FIG. 8 is a flowchart illustrating the operation of user equipment according to an embodiment.

Referring to FIG. 8, in a method of performing sidelink communications over an unlicensed band, the user equipment may perform an operation S810 of configuring parameters for sidelink-specific consistent LBT failure detection.

According to an embodiment, the user equipment may receive parameters for sidelink-specific consistent LBT failure detection from the base station and configure the received parameters on itself. According to another embodiment, the user equipment may receive parameters for sidelink-specific consistent LBT failure detection from another user equipment (e.g., an anchor user equipment) and configure the received parameters on itself. According to further another embodiment, the user equipment may configure the parameters for sidelink-specific consistent LBT failure detection in itself in advance.

For example, the user equipment may receive parameters for sidelink-specific consistent LBT failure detection via RRC signaling. Alternatively, the user equipment may receive these parameters for sidelink-specific consistent LBT failure detection via sidelink RRC signaling or a physical sidelink shared channel (PSSCH).

For example, the parameters may include at least one of the following: information about a sidelink LBT failure detection timer (e.g., SL-lbt-FailureDetectionTimer) or information about a sidelink LBT failure instance maximum count (e.g., SL-lbt-FailureInstanceMaxCount). The sidelink LBT failure detection timer may refer to a timer or a timer value that operates to detect an LBT failure while the sidelink is performing an LBT operation. The maximum count of sidelink LBT failures may be a value associated with a maximum number of failures recorded when the user equipment performs the LBT on the sidelink and then fails. For example, the user equipment may increase the count value by 1 when the sidelink LBT fails and trigger a sidelink LBT failure when the count value reaches the sidelink LBT failure instance maximum count value. Here, the sidelink LBT failure may refer to the sidelink-specific consistent LBT failure as described later.

The user equipment may use the received parameters to perform an operation S820 of detecting a sidelink-specific consistent LBT failure.

For example, the operation of detecting a sidelink-specific consistent LBT failure may be configured to be performed independent of the type of sidelink cast. The user equipment may detect a sidelink-specific consistent LBT failure without distinguishing whether the sidelink is unicast, groupcast, or broadcast. Furthermore, the user equipment may detect a sidelink-specific consistent LBT failure independent of any other sidelink types.

The sidelink-specific consistent LBT failure detection may be performed per a sidelink resource pool or a resource block set. For example, the sidelink-specific consistent LBT failure detection may be performed based on a sidelink resource pool, i.e., according to the sidelink resource pool configured in the user equipment. As another example, the user equipment may detect a sidelink-specific consistent LBT failure according to the sidelink resource block set configured in the user equipment.

The sidelink LBT operation is performed for sidelink resources. The user equipment may detect a sidelink-specific consistent LBT failure when a sidelink LBT failure is detected up to a maximum count value per a specific sidelink resource pool including one or more sidelink resources. Similarly, the user equipment may perform the sidelink LBT operation per a resource block set and detect a sidelink-specific consistent LBT failure per a resource block set.

Specifically, for example, upon receiving a sidelink-specific LBT failure indication from a lower layer, the user equipment may start or restart the sidelink LBT failure detection timer. Thereafter, the user equipment may increase a count for sidelink LBT failure detection by 1. If the count for sidelink LBT failure detection is greater than or equal to the maximum number of sidelink LBT failure instances, the user equipment may trigger a sidelink-specific consistent LBT failure. The above operation may be performed in a MAC entity of the user equipment.

When the user equipment receives a sidelink-specific LBT failure indication from a physical layer, the user equipment starts or restarts the timer and increases the count value for sidelink LBT failure detection by 1. When the count value reaches the maximum number of sidelink LBT failure instances, the MAC entity may trigger the sidelink-specific consistent LBT failure.

The user equipment may perform an operation S830 of transmitting detection information on the sidelink-specific consistent LBT failure to the base station.

According to an embodiment, the user equipment may notify the base setation upon detecting the sidelink-specific consistent LBT failure. For example, the user equipment may transmit a MAC control element to the base station, which includes resource identification information regarding a resource where the sidelink-specific consistent LBT failure occurred. The resource identification information may include information indicating a sidelink resource pool or a set of sidelink resource blocks. As another example, the user equipment may report the sidelink-specific consistent LBT failure to the base station over either the uplink control channel or the uplink data channel. In this case, the user equipment may also use the resource identification information to report to the base station indicating the resource pool or resource block set that experienced the sidelink-specific consistent LBT failure.

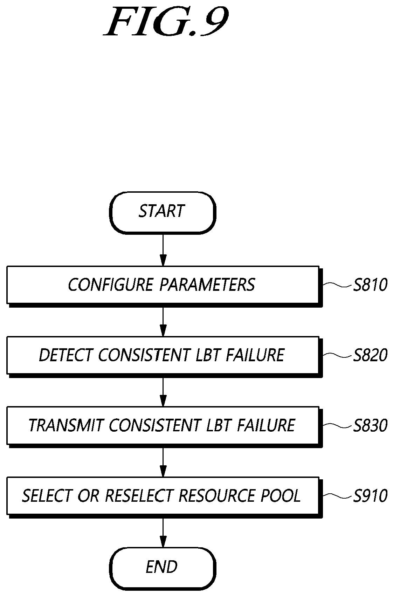

FIG. 9 is a flowchart illustrating the operation of user equipment according to another embodiment.

Referring to FIG. 9, the user equipment may further perform an operation S910 of selecting or reselecting a resource pool if the resource in which the sidelink-specific consistent LBT failure occurred is present in a resource pool selected by the user equipment in sidelink resource allocation mode 2.

According to an embodiment, the operation S910 may be performed after the operation S830. According to another embodiment, the operation S910 may be performed between the operation S820 and the operation S830. For ease of understanding, the following description will focus on the case where the operation S910 is performed after the operation S830. However, the operation S910 may be performed at any point in time after the sidelink-specific consistent LBT failure has been detected.

The user equipment may select a sidelink radio resource to perform sidelink communications. According to an embodiment, in resource allocation mode 1, the user equipment may select the sidelink radio resource indicated by the base station. According to another embodiment, in resource allocation mode 2, the user equipment may select a sidelink radio resource by a sutibale method in the pool of radio resources allocated by the base station.

In that the case where the user equipment selects a radio resource for sidelink communications in resource allocation mode 2, the user equipment may perform a resource pool selection or reselection operation if the sidelink-specific consistent LBT failure is detected in the selected radio resource. Specifically, the user equipment may reselect a radio resource pool to reduce the probability of the sidelink-specific consistent LBT failure if the sidelink-specific consistent LBT failure is detected in the specific radio resource pool.

A detailed description of the operations S810 to S830 in FIG. 9 will be omitted because the operations S810 to S830 have been explained above with reference to FIG. 8.

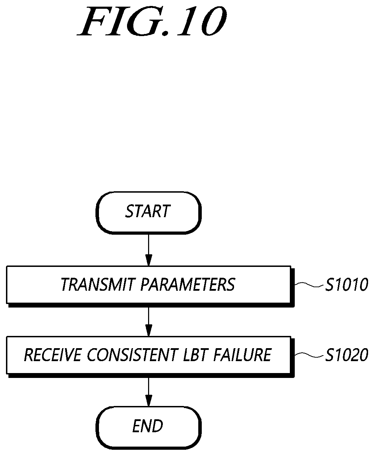

FIG. 10 is a flowchart illustrating the operation of a base station according to an embodiment.

Referring to FIG. 10, in a method of performing sidelink communications with user equipment over an unlicensed band, the base station may perform an operation S1010 of transmitting parameters for sidelink-specific consistent LBT failure detection to the user equipment.

According to an embodiment, the base station may transmit the parameters for sidelink-specific consistent LBT failure detection via RRC signaling.

According to an embodiment, the parameters may include at least one of the following: information about a sidelink LBT failure detection timer (e.g., SL-lbt-FailureDetectionTimer) or information about a sidelink LBT failure instance maximum count (e.g., SL-lbt-FailureInstanceMaxCount). The sidelink LBT failure detection timer may refer to a timer or a timer value which operates to detect an LBT failure while the sidelink is performing the LBT operation. The sidelink LBT failure instance maximum count may be a value associated with the maximum number of failure instances when the user equipment performs the LBT on the sidelink and then fails. For example, the user equipment may increase the count value by 1 when the sidelink LBT fails and finally trigger a sidelink LBT failure when the count value reaches the sidelink LBT failure instance maximum count value. Here, the sidelink LBT failure may mean the sidelink-specific consistent LBT failure, as described later.

The user equipment may detect a sidelink-specific consistent LBT failure using the parameters. For example, the user equipment may perform the sidelink-specific consistent LBT failure detection independent of the type of sidelink cast. The user equipment may detect a sidelink-specific consistent LBT failure without distinguishing whether the sidelink is unicast, groupcast, or broadcast. Furthermore, the user equipment may detect a sidelink-specific consistent LBT failure independent of any other sidelink types.

The sidelink-specific consistent LBT failure detection may be performed per a sidelink resource pool or a resource block set. For example, the sidelink-specific consistent LBT failure detection may be performed according to the sidelink resource pool configured in the user equipment. As another example, the user equipment may also detect a sidelink-specific consistent LBT failure according to the sidelink resource block set configured in the user equipment.

Specifically, for example, upon receiving a sidelink-specific LBT failure indication from a lower layer, the user equipment may start or restart the sidelink LBT failure detection timer. Thereafter, the user equipment may increase a count for sidelink LBT failure detection by 1. If the count for sidelink LBT failure detection is greater than or equal to the maximum number of sidelink LBT failure instances, the user equipment may trigger a sidelink-specific consistent LBT failure. The above operation may be performed in a MAC entity of the user equipment.

The base station may perform an operation S1020 of receiving a detected sidelink-specific consistent LBT failure from the user equipment using parameters.

According to an embodiment, the base station may receive, from the user equipment, information indicating that a sidelink-specific consistent LBT failure has been detected. For example, the base station may receive a MAC control element from the user equipment, the MAC control element containing resource identification information about a resource where the sidelink-specific consistent LBT failure occurred. The resource identification information may include information indicating a sidelink resource pool or a set of sidelink resource blocks. As another example, the base station may receive from the user equipment, via an uplink control channel or an uplink data channel, the resource identification information if the sidelink-specific consistent LBT failure occurs.

In case that the user equipment selects a radio resource for sidelink communications in resource allocation mode 2, the user equipment may perform a resource pool selection or reselection operation if the sidelink-specific consistent LBT failure is detected in the selected radio resource. That is, the user equipment may reselect a radio resource pool to reduce the probability of the sidelink-specific consistent LBT failure if the sidelink-specific consistent LBT failure is detected in the specific radio resource pool.

Through the above operation according to the embodiments, the user equipment and the base station may effectively process the sidelink communication of the user equipment by transmitting detection information on the sidelink-specific consistent LBT failure to the base station when the sidelink-specific consistent LBT failure is detected.

Hereinafter, various embodiments performed by the user equipment or the base station will be described in more detail. Each of the embodiments described below may be performed by the user equipment and the base station individually or in any combination.

### Detection of Consistent LBT Failure on Sidelink

In the related art, a consistent LBT failure independent of consecutive LBT failures is only detected in uplink transmissions. Therefore, when sidelink communications are performed over a shared channel in an unlicensed band, sidelink communications may not operate efficiently if a consistent LBT failure occurs in sidelink. As another example, if sidelink transmissions are scheduled by base station scheduling (e.g., Mode1), a consistent LBT failure in the base station scheduling interface may prevent sidelink communications. To overcome this problem, the following methods may be used.

For example, the base station may configure parameters for sidelink-specific consistent LBT failure detection in the user equipment via the RRC. The parameters may include a consistent sidelink LBT failure detection timer (e.g., SL-lbt-FailureDetectionTimer) and a sidelink LBT failure instance maximum count (e.g., SL-lbt-FailureInstanceMaxCount) which determines the number of LBT failure indications received from a physical layer in which the user equipment triggers sidelink LBT failure detection or sidelink LBT failure recovery.

Sidelink LBT failure detection may be based on all sidelink transmissions in the corresponding sidelink carrier in a sidelink carrier/cell/component carrier-specific manner. As another example, sidelink LBT failure detection may be based on (all) sidelink transmissions performed by the user equipment. As another example, sidelink LBT failure detection may be based on all sidelink transmissions, such as unicast, broadcast, or groupcast, in the corresponding sidelink BWP and performed in a sidelink BWP-specific manner. As another example, sidelink LBT failure detection may be based on (all) sidelink transmissions using a specific sidelink resource pool, BWP resource pool/BWP-POOL, and/or resource block set in the specific sidelink BWP according to the corresponding sidelink resource pool, BWP resource pool/BWP-POOL, and/or resource block set within the sidelink BWP. As an example, for a resource pool used for power saving on a configured sidelink BWP, sidelink LBT failure detection may be based on (all) sidelink transmissions using the corresponding sidelink BWP pool. As another example, for a resource pool dedicated to sidelink discovery in a configured sidelink BWP, sidelink LBT failure detection may be based on (all) sidelink transmissions using the corresponding sidelink BWP pool.

A user equipment variable (e.g., SL_LBT_COUNTER) may be used for consistent sidelink LBT failure detection. For example, the variable may be initially set to zero (0) as a counter indicating a sidelink LBT failure. The corresponding user equipment variable may be used in a sidelink carrier/cell/component carrier-specific manner. As another example, the user equipment variable may be used according to the user equipment. As another example, the corresponding user equipment variable may be used in a sidelink BWP-specific manner. As another example, the corresponding user equipment variable may be used in a sidelink resource pool/BWP resource pool/BWP pool/resource block set-specific manner.

The user equipment (e.g., MAC entity) may operate as follows.
> If a sidelink LBT failure indication is received from a lower layer (e.g., a physical layer),
>> sidelink LBT failure detection timer is started or restarted; and
>> the user equipment variable (e.g., count) is increased by 1 for the sidelink LBT failure detection.
>> For sidelink LBT failure detection, if the user equipment variable (e.g., count) is greater than or equal to the sidelink LBT failure instance maximum count,
>>> For an (active) sidelink BWP on the sidelink carrier/frequency (or for this sidelink carrier/frequency, for sidelink communication of this user equipment, or for the corresponding resource pool/BWP resource pool/BWP pool/resource block set of the sidelink BWP of this sidelink carrier/frequency), a consistent sidelink LBT failure may be triggered.
>>> If the cell is a sidelink carrier, the operation of the user equipment is described separately in this specification.

The user equipment may set the user equipment variable for sidelink LBT failure detection to 0 if all triggered consistent sidelink LBT failures on the corresponding sidelink carrier are canceled, if sidelink LBT failure detection timer expires, or if one or more of the parameters for consistent LBT failure detection are reconfigured by a higher layer (RRC).

### Embodiment of Operation of User Equipment due to Consistent Sidelink LBT Failure Trigger

For example, the user equipment may release a PC5 RRC connection. The user equipment may declare a sidelink RLF on the PC5-RRC connection. Accordingly, the user equipment may release the PC5-RRC connection (for the corresponding destination). Upon detection of a sidelink radio failure for a specific destination (triggered by a consistent sidelink LBT failure), the user equipment may release SRBs/DRBs for the destination, as well as the PDCP entity, RLC entity, and logical channel of the sidelink SRB/DRB. The sidelink-specific MAC for the destination may be reset. The user equipment may store sidelink radio link failure information (e.g., SL LBT failure, SL RLF, or LBT failure) in the corresponding user equipment variables. If the user equipment is L2 U2N remote user equipment (UE), the user equipment may initiate RRC reset procedures.

In another example, the user equipment may reinitialize, set, and/or reset the user equipment variables (e.g., numConsecutiveDTX) used for HARQ-based sidelink RLF detection to 1. This information is maintained for each PC5 RRC connection (set by a higher layer) as a parameter used for sidelink RLF detection based on HARQ. The sidelink HARQ entity may increase the corresponding variable of the user equipment by 1 for each PSFCH receive acknowledgment associated with a PSSCH transmission, if the PSFCH receive acknowledgment is absent. If the corresponding user equipment variable reaches information indicating the maximum number of consecutive HARQ DTXs before triggering sidelink RLF (e.g., sl-MaxNumConsecutiveDTX), the HARQ-based sidelink RLF detection may be directed via RRC.

In another example, a lower layer (e.g., PHY/MAC) of the user equipment may direct a consistent sidelink failure indication to a higher layer (e.g., RRC) of the user equipment. The user equipment may consider that a sidelink radio link failure has been detected for a sidelink carrier/resource pool/resource block set. The user equipment may suspend the transmission/reception of (all) sidelink DRBs and/or sidelink SRBs on the corresponding sidelink carrier.

In another example, an L2/L3 U2N relay user equipment may indicate a consistent sidelink LBT failure (or sidelink radio link failure) to a higher layer (e.g., PC5-S/NAS/RRC). As another example, the L2/L3 U2N relay user equipment may transmit a notification message to the at least one L2/L3 U2N remote user equipment. As another example, the L2/L3 U2N relay user equipment may transmit the consistent sidelink LBT failure (or the sidelink radio link failure) to the base station.

In another example, the user equipment may maintain/suspend the PC5 RRC connection. The user equipment may store sidelink radio link failure information (e.g., SL LBT failure, SL RLF, or LBT failure) in the corresponding user equipment variables. The user equipment may perform a switching operation on one or more of the following at the lower layer: sidelink carrier/frequency, sidelink BWP, sidelink resource pool/BWP resource pool/BWP- pool/resource block set.

In another example, the user equipment may maintain/suspend the PC5 RRC connection. The user equipment may store sidelink radio link failure information (e.g., SL LBT failure, SL RLF, or LBT failure) in the corresponding user equipment variables. The user equipment may suspend the corresponding sidelink (to the destination) SRBs/DRBs, PDCP entities, RLC entities, and logical channels of the sidelink SRB/DRB. The sidelink-specific MAC for the corresponding destination may be reset. The user equipment may perform a switching operation on one or more of the following at lower layers: sidelink carrier/frequency, sidelink BWP, sidelink resource pool/BWP resource pool/BWP pool/resource block set.

In another example, the user equipment (e.g., MAC entity) may be configured to have one or more (or plural) sidelink BWPs. If the user equipment operates with unlicensed band shared spectrum frequency channel access on the sidelink, the user equipment (e.g., MAC entity) may be configured to have one or more (or plural) sidelink BWPs. The sidelink carrier/frequency configuration may be configured to have a list of parameters (e.g., channelAccessConifg) for an access procedure to operate with unlicensed band shared spectrum frequency channel access and/or parameters (e.g., channelAccessMode) to direct a channel access procedure to apply operations having unlicensed band shared spectrum frequency channel access. When the user equipment (e.g., MAC entity) triggers a consistent sidelink LBT failure for an active sidelink BWP on the corresponding sidelink carrier/frequency, the user equipment (e.g., MAC entity) may switch the active sidelink BWP on the corresponding sidelink carrier/frequency (on the same carrier in the given sidelink carrier/frequency) to a (different) sidelink BWP in which no consistent sidelink LBT failure is triggered. For reference, in the related art, the MAC entity of the user equipment may be configured to have as many as a single sidelink BWP. Sidelink transmissions/receptions may be performed through a single sidelink BWP.

In another example, the user equipment (e.g., MAC entity) may be configured to have one or more (or plural) sidelink frequencies (e.g., SL-FreqConfigs). The user equipment may support carrier merging on the sidelink. If the user equipment operates with unlicensed band shared spectrum frequency channel access on the sidelink, the user equipment (e.g., MAC entity) may be configured to have one or more (or plural) sidelink BWPs. The corresponding sidelink carrier/frequency configuration may be configured to have a list of parameters (e.g., channelAccessConifg) for an access procedure to operate with unlicensed band shared spectrum frequency channel access and/or parameters (e.g., channelAccessMode) to direct a channel access procedure to apply operations using unlicensed band shared spectrum frequency channel access.

If the user equipment (e.g., MAC entity) triggers the consistent sidelink LBT failure for the active sidelink BWP on the corresponding sidelink carrier/frequency, the user equipment (e.g., MAC entity) may switch the sidelink carrier/frequency to a (different) sidelink carrier/frequency on which no consistent sidelink LBT failure is triggered and/or select the (different) sidelink carrier/frequency on which no consistent sidelink LBT failure is triggered as the sidelink carrier/frequency. If there are one or more sidelink carriers/frequencies on which no consistent sidelink LBT failure is occurred, the user equipment may select the same unlicensed band shared spectrum sidelink carrier/frequency including the sidelink BWP in which the consistent sidelink LBT failure is triggered. As another example, if the user equipment (e.g., MAC entity) triggers the consistent sidelink LBT failure for the active sidelink BWP on the corresponding sidelink carrier/frequency, the user equipment (e.g., MAC entity) may switch the corresponding sidelink carrier/frequency to a (different) unlicensed band shared spectrum sidelink carrier/frequency on which no consistent sidelink LBT failure is triggered and/or select the (different) unlicensed band shared spectrum sidelink carrier/frequency on which no consistent sidelink LBT failure is triggered as the corresponding sidelink carrier/frequency.

In another example, if the user equipment (e.g., MAC entity) triggers a consistent sidelink LBT failure for an active sidelink BWP on the corresponding sidelink carrier/frequency, the user equipment (e.g., MAC entity) may switch the active sidelink BWP on the corresponding sidelink carrier/frequency to a sidelink BWP on a (different) sidelink carrier/frequency on which no consistent sidelink LBT failure is triggered and/or select the sidelink BWP on the (different) sidelink carrier/frequency on which no consistent sidelink LBT failure is triggered as the active sidelink BWP. As another example, if the user equipment (e.g., MAC entity) triggers the consistent sidelink LBT failure for the active sidelink BWP on the corresponding sidelink carrier/frequency, the user equipment (e.g., MAC entity) may switch the active sidelink BWP on the corresponding sidelink carrier/frequency to a sidelink BWP on a (different) unlicensed band shared spectrum sidelink carrier/frequency on which no consistent sidelink LBT failure is triggered and/or select the sidelink BWP on the (different) unlicensed band shared spectrum sidelink carrier/frequency on which no consistent sidelink LBT failure is triggered as the active sidelink BWP. If there are one or more sidelink BWPs in which no consistent sidelink LBT failure is triggered, the user equipment may select the BWP included on the same unlicensed band shared spectrum sidelink carrier/frequency including the sidelink BWP in which the consistent sidelink LBT failure is triggered.

The same unlicensed band shared spectrum sidelink carrier/frequency may be preferred over other unlicensed band shared spectrum sidelink carriers/frequencies. As another example, if there are one or more sidelink BWPs on which no consistent sidelink LBT failure is triggered, the user equipment may select a BWP included in a different unlicensed spectrum sidelink carrier/frequency than the unlicensed spectrum sidelink carrier/frequency including the sidelink BWP on which the consistent sidelink LBT failure is occurred. A different unlicensed band shared spectrum sidelink carrier/frequency may be preferred over the same unlicensed band shared spectrum sidelink carrier/frequency. As another example, the selection may be based on sidelink measurements or any criteria defined by the user equipment.

For reference, in the related art, the user equipment may be configured to have a single sidelink frequency. Sidelink transmission/reception may be performed through a single sidelink BWP on the single sidelink frequency.

In another example, if the user equipment (e.g., MAC entity) triggers a consistent sidelink LBT failure for a specific sidelink resource pool/resource block set (of the active sidelink BWP) on the corresponding sidelink carrier/frequency, the user equipment (e.g., MAC entity) may switch the specific sidelink resource pool/resource block set (of the active sidelink BWP) on the corresponding sidelink carrier/frequency to a different sidelink resource pool/resource block set (of a (different) unlicensed band shared spectrum sidelink carrier/frequency on which no consistent sidelink LBT failure is triggered) and/or select the different sidelink resource pool/resource block set as the specific sidelink resource pool/resource block set. For example, mode 2 user equipment which performs sidelink communications by selecting a resource pool may select or reselect a different resource pool if a consistent sidelink LBT failure is detected in the resource pool selected by the corresponding user equipment or if a consistent sidelink LBT failure is detected in all resource block sets in the resource pool selected by the corresponding user equipment. The user equipment (e.g., MAC entity) may select one or more sidelink carriers/frequencies . The sidelink carrier/frequency selection may be performed by considering the CBR. The sidelink carrier/frequency selection may be performed when the resource selection/reselection is triggered, when the resource selection/reselection is triggered for a corresponding sidelink process, and/or when the consistent sidelink LBT failure is triggered.

In another example, if the switched sidelink carrier/frequency used for the corresponding sidelink communication is included in the sidelink frequency configuration information contained in the RRC reconfiguration message or the corresponding system information and the sidelink synchronization priority configured for the corresponding frequency is provided, a synchronization reference source may be selected/reselected based on the corresponding sidelink synchronization priority value (e.g., the corresponding cell in the case of the base station or the GNSS in the case of GNSS).

In another example, when the user equipment (e.g., MAC entity) triggers a consistent sidelink LBT failure for an active sidelink BWP on the corresponding sidelink carrier/frequency, the user equipment (e.g., MAC entity) may perform Tx resource selection/reselection on the corresponding sidelink carrier/frequency (within the same carrier in the corresponding sidelink carrier/frequency). As another example, if the user equipment (e.g., MAC entity) triggers a consistent sidelink LBT failure for an active sidelink BWP on the corresponding sidelink carrier/frequency (or if the transmission(s) using the selected sidelink grant trigger a consistent sidelink LBT failure), the user equipment (e.g., MAC entity) may clear/release the selected sidelink grant associated with the corresponding sidelink process if available on the corresponding sidelink carrier/frequency (i.e., within the same carrier in the corresponding sidelink carrier/frequency). The Tx resource selection/reselection may be performed.

In another example, if the user equipment (e.g., MAC entity) triggers a consistent sidelink LBT failure for an active sidelink BWP on the corresponding sidelink carrier/frequency, the user equipment (e.g., MAC entity) may perform the Tx resource selection/reselection on the switched sidelink carrier/frequency, the sidelink BWP, and/or the sidelink resource pool/BWP-resource pool/BWP pool/resource block set. The user equipment (e.g., MAC entity) may clear/release selected sidelink grants associated with the corresponding sidelink process on the corresponding sidelink carrier/frequency.

In another example, when the user equipment (e.g., MAC entity) triggers a consistent sidelink LBT failure for an active sidelink BWP on the corresponding sidelink carrier/frequency, the user equipment may (autonomously) select a sidelink resource from a pool of resources (on any sidelink carrier/frequency) provided via broadcast system information or dedicated signaling when in the NG-RAN coverage. As another example, outside of the NG-RAN coverage, the user equipment may autonomously select a sidelink resource from a pool of resources provided by preconfiguration.

In another example, in the case where the user equipment (e.g., MAC entity) triggers a consistent sidelink LBT failure for an active sidelink BWP on the corresponding sidelink carrier/frequency, if the corresponding RRC reconfiguration message (or system information) contains a sidelink TX exception pool (e.g., SL-TxPoolExceptional or a dedicated TX exception pool directed for this purpose) for the corresponding frequency or if the corresponding RRC reconfiguration message (or system information) contains a sidelink TX exception pool to be used when the consistent sidelink LBT failure occurs, the user equipment may cause the lower layer (e.g., PHY/MAC) to be configured to perform sidelink resource allocation mode 2 based on random selection using a resource pool directed by the corresponding sidelink TX exception pool (e.g., SL-TxPoolExceptional or a dedicated TX exception pool directed for this purpose).

### Embodiment of Consistent LBT Failure Report on Sidelink

When a consistent sidelink failure is detected in the sidelink carrier(s), the user equipment may transmit the consistent sidelink failure to the corresponding base station via any L3 (e.g., sidelink user equipment information RRC message) signaling, L2 (e.g., MAC CE) signaling, and/or L1 (e.g., PUCCH or PUSCH) signaling. A detailed signaling format may be defined to indicate this. The corresponding signaling (e.g., L3 (e.g., sidelink user equipment information RRC message) signaling, L2 (e.g., MAC CE) signaling, and/or L1 (e.g., PUCCH or PUSCH) signaling) may be transmitted via any serving cell (e.g., a PCell, a PSCell, or SCells). As another example, the corresponding signaling may be transmitted via any serving cell other than a cell using an unlicensed band shared channel, if configured. If resources for transmitting the corresponding signaling are unavailable, a scheduling request may be transmitted by the user equipment. When a consistent sidelink LBT failure is detected, the user equipment may switch/select from the corresponding sidelink carrier to another sidelink carrier. As another example, another sidelink BWP may be switched and/or selected in the corresponding sidelink BWP. As another example, another sidelink resource pool may be switched and/or selected within the corresponding sidelink resource pool. If a plurality of sidelink carriers/BWPs/POOLs are available for switching, the user equipment may select one of the plurality of sidelink carriers/BWPs/POOLs based on arbitrary criteria (or based on criteria directed by the base station or considering sidelink measurements or sidelink CBR measurements). When the user equipment detects a consistent LBT failure for the sidelink carrier, the user equipment may declare a sidelink RLF. The user equipment may then transmit this failure to the base station via a sidelink user equipment information message. The corresponding message may include one or more pieces of information of any information contained in the disclosure (e.g., information included in a sidelink LBT failure MAC CE).

If a consistent sidelink LBT failure occurs on an anchor carrier which provides a sidelink configuration over a Uu carrier, the consistent sidelink LBT failure may be transmitted to the base station over a non-anchor carrier (or a serving cell which is not a serving cell using an anchor carrier).

### Sidelink LBT Failure MAC CE

The user equipment may transmit a sidelink LBT failure MAC CE to the base station. The user equipment may transmit a sidelink LBT failure MAC CE to the base station when the user equipment performs sidelink communication/transmission using resource allocation mode 1 in an RRC connection state. As another example, the user equipment may transmit a sidelink LBT failure MAC CE to peer user equipment.

For example, a sidelink LBT failure MAC CE may be comprised of a single octet identified by a MAC subheader having a corresponding LCID. As an example, a single octet format may be used when the sidelink frequency of the user equipment (MAC entity) on which a corresponding LBT failure is detected is less than (or equal to) 8 (or when the identifier/index/identity of the highest sidelink frequency is less than (or equal to) 8). As another example, the corresponding single octet format may be used when the unlicensed band shared spectrum sidelink frequency of the user equipment (e.g., MAC entity) on which the corresponding LBT failure is detected is less than (or equal to) 8 (or when the identifier/index/identity of the highest sidelink frequency is less than (or equal to) 8). As another example, the corresponding single octet format may be configured to have one sidelink frequency for the corresponding user equipment (e.g., MAC entity) having a sidelink frequency identifier/index/identity i, and to have eight Ci fields that are set to 1 when a consistent sidelink LBT failure is triggered but not canceled on the corresponding sidelink frequency and set to 0 otherwise (or if each case is set using 1,0 or 0,1).

In another example, a single octet format may be used when the BWP of the sidelink frequency of the user equipment (MAC entity) on which the corresponding LBT failure is detected is less than (or equal to) 8 (or when the highest sidelink BWP identifier/index/identity is less than (or equal to) 8, or when the sidelink BWP configured in the user equipment is less than (or equal to) 8). As another example, the corresponding single octet format may be configured to have one sidelink BWP for the corresponding user equipment (e.g., MAC entity) having identifier/index/identity i, and eight Ci fields which are set to 1 when the consistent sidelink LBT failure is triggered but not canceled on the corresponding sidelink BWP and set to 0 otherwise (or if each case is set using 1,0 or 0,1).

In another example, the corresponding single octet format may be configured such that a single sidelink BWP for the corresponding user equipment (MAC entity) has identifier/index/identity i in the ascending (or descending) order of sidelink frequency identifier/index/identity and/or corresponding identifier/index/identity i in the ascending (or descending) order of sidelink BWP identifier/index/identity on the corresponding sidelink frequency. The corresponding single octet format may be configured to have eight Ci fields which are set to 1 when the consistent sidelink LBT failure is triggered but not canceled on the corresponding sidelink BWP and set to 0 otherwise (or if each case is set using 1,0 or 0,1).

In another example, the sidelink LBT failure MAC CE may be comprised of one or more octets identified by a MAC subheader having a corresponding LCID. As an example, the corresponding octet format may include a field indicating the identifier/index/identity of the sidelink frequency on which the consistent sidelink LBT failure is triggered but not canceled on the corresponding sidelink BWP and a field indicating the sidelink BWP identifier/index/identity of the sidelink frequency on which the consistent sidelink LBT failure is triggered but not canceled on the corresponding sidelink BWP. Furthermore, the corresponding octet format may be configured to have a fixed size.

In another example, the corresponding octet format may be configured to include one or more from a field indicating the identifier/index/identity of the sidelink frequency on which the consistent sidelink LBT failure is triggered but not canceled in the corresponding sidelink BWP, a field indicating the sidelink BWP identifier/index/identity of the sidelink frequency on which the consistent sidelink LBT failure is triggered but not canceled in the corresponding sidelink BWP, a field indicating the identifier/index/identity of the sidelink resource pool/resource block set of the sidelink frequency on which the consistent sidelink LBT failure is triggered but not canceled in the corresponding sidelink resource pool/resource block set, and the number of sidelink carriers/BWPs/resource pools/resource block sets of the sidelink frequency on which the consistent sidelink LBT failure is triggered but not canceled in the corresponding sidelink BWP. The corresponding octet format may be configured to have variable lengths/sizes depending on the number of sidelink carriers/BWPs/resource pools of the sidelink frequency on which the consistent sidelink LBT failure is triggered but not canceled in the corresponding sidelink BWP.

In another example, a specific priority may be determined/applied as a priority for a MAC CE indicating a consistent sidelink LBT failure if a logical channel prioritization procedure is applied when the user equipment (e.g., MAC entity) performs a new transmission. As an example, the MAC CE indicating the consistent sidelink LBT failure may be processed with a higher priority than a MAC CE indicating a consistent uplink LBT failure on the Uu interface. As another example, the MAC CE indicating the consistent sidelink LBT failure may be processed with a lower priority than the MAC CE indicating the consistent uplink LBT failure on the Uu interface. As another example, the MAC CE indicating the consistent sidelink LBT failure may be processed with the same priority as the MAC CE indicating the consistent uplink LBT failure on the Uu interface. As another example, the MAC CE indicating the consistent sidelink LBT failure may be treated with a lower priority than an SL-BSR MAC CE (except for SL-BSR prioritized and SL-BSR included for padding). As another example, the MAC CE indicating the consistent sidelink LBT failure may be processed at a higher priority than the SL-BSR MAC CE (except for SL-BSR prioritized and SL-BSR included for padding). As another example, the corresponding MAC CE may be prioritized in a higher order than data from any logical channel (except for data from a UL-CCCH for NR sidelink communication).

According to the embodiments described above, consistent LBT failures in sidelink communications over the shared spectrum may be effectively processed.

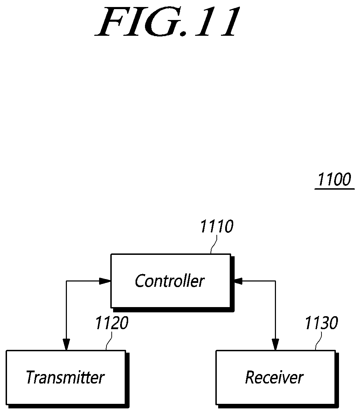

FIG. 11 is a block diagram illustrating user equipment according to an embodiment.

Referring to FIG. 11, user equipment 1100 performing sidelink communications in an unlicensed band may include a controller 1110 for configuring parameters for sidelink-specific consistent LBT failure detection and detecting the sidelink-specific consistent LBT failure using the parameters and a transmitter 1120 for transmitting information on the sidelink-specific consistent LBT failure to a base station.

According to an embodiment, a receiver 1130 may receive the parameters for sidelink-specific consistent LBT failure detection from the base station. The controller 1110 may configure the received parameters in the user equipment. As another example, the controller 1110 may receive the parameters for sidelink-specific consistent LBT failure detection from other user equipment (e.g., anchor user equipment) and configure the received parameters. As another example, the controller 1110 may configure the parameters for sidelink-specific consistent LBT failure detection in the user equipment in advance.

According to an embodiment, the receiver 1130 may receive the parameters for sidelink-specific consistent LBT failure detection via RRC signaling. According to another embodiment, the receiver 1130 may receive parameters for sidelink-specific consistent LBT failure detection via sidelink RRC signaling or a PSSCH.

For example, the parameters may include at least one of the following: information about a sidelink LBT failure detection timer (e.g., SL-lbt-FailureDetectionTimer) and information about a sidelink LBT failure instance maximum count (e.g., SL-lbt-FailureInstanceMaxCount). The sidelink LBT failure detection timer may refer to a timer or a timer value which operates to detect an LBT failure while the sidelink is performing an LBT operation. The maximum count of sidelink LBT failures may be a value associated with a maximum number of failures when the user equipment performs the LBT on the sidelink and then fails. For example, the user equipment may increase the count value by 1 when the sidelink LBT fails and finally trigger a sidelink LBT failure when the count value reaches the sidelink LBT failure instance maximum count value.

For example, the controller 1110 may detect a sidelink-specific consistent LBT failure independent of the type of sidelink cast. The controller 1110 may detect a sidelink-specific consistent LBT failure without distinguishing whether the sidelink is unicast, groupcast, or broadcast. Furthermore, the controller 1110 may detect a sidelink-specific consistent LBT failure independent of any other sidelink types.

The sidelink-specific consistent LBT failure detection may be performed per a sidelink resource pool or a resource block set. For example, the sidelink-specific consistent LBT failure detection may be performed according to the sidelink resource pool configured in the user equipment. As another example, the user equipment may detect a sidelink-specific consistent LBT failure according to the sidelink resource block set configured in the user equipment.

The sidelink LBT operation is performed for sidelink resources. The controller 1110 may detect a sidelink-specific consistent LBT failure when a sidelink LBT failure is detected up to a maximum count value in a specific sidelink resource pool including one or more sidelink resources. Similarly, the controller 1110 may perform the sidelink LBT operation per a resource block set and detect a sidelink-specific consistent LBT failure per a resource block set.

Specifically, for example, upon receiving a sidelink-specific LBT failure indication from a lower layer, the controller 1110 may start or restart the sidelink LBT failure detection timer. Thereafter, the controller 1110 may increase a count for sidelink LBT failure detection by 1. If the count for sidelink LBT failure detection is greater than or equal to the maximum number of sidelink LBT failure instances, the controller 1110 may trigger a sidelink-specific consistent LBT failure. The above operation may be performed in a MAC entity of the user equipment.

According to an embodiment, the transmitter 1120 may transmit detection information on the sidelink-specific consistent LBT failure to the base station when the sidelink-specific consistent LBT failure is detected. As an example, the transmitter 1120 may transmit a MAC control element to the base station, the MAC control element containing resource identification information about a resource where the sidelink-specific consistent LBT failure occurred. The resource identification information may include information indicating a sidelink resource pool or a set of sidelink resource blocks. As another example, the transmitter 1120 may report the sidelink-specific consistent LBT failure to the base station over an uplink control channel or an uplink data channel. In this case, the user equipment may also use the resource identification information to report to the base station which specific resource pool or resource block set experienced the sidelink-specific consistent LBT failure.

According to an embodiment, the controller 1110 may further perform an operation of selecting or reselecting a resource pool if the resource in which the sidelink-specific consistent LBT failure occurred is present in a resource pool selected by the user equipment in sidelink resource allocation mode 2.

The controller 1110 may select a sidelink radio resource to perform sidelink communications. For example, in resource allocation mode 1, the controller 1110 may select the sidelink radio resource indicated by the base station. As another example, in resource allocation mode 2, the controller 1110 may select a sidelink radio resource using any approach in the pool of radio resources allocated by the base station.

In the case where the user equipment selects a radio resource for sidelink communications in resource allocation mode 2, the user equipment may perform a resource pool selection or reselection operation if the sidelink-specific consistent LBT failure is detected in the selected radio resource. Specifically, the user equipment may reselect a radio resource pool to reduce the probability of the sidelink-specific consistent LBT failure if the sidelink-specific consistent LBT failure is detected in the specific radio resource pool.

In addition, the controller 1110 controls the overall operation of the user equipment 1100 in effectively processing consistent LBT failures in shared spectrum sidelink communications necessary to perform the disclosure described above.

Furthermore, the transmitter 1120 and the receiver 1130 are used to transmit and receive signals, messages, and data to and from another user equipment or base station necessary to perform the embodiments described above.

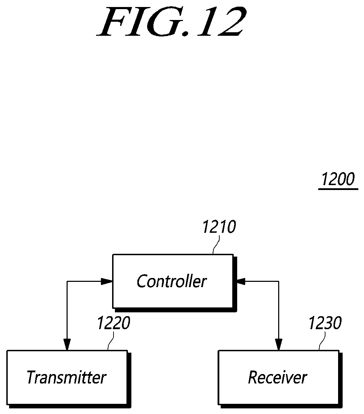

FIG. 12 is a block diagram illustrating a base station according to an embodiment.

Referring to FIG. 12, a base station 1200 performing sidelink communications of user equipment in an unlicensed band may include a transmitter 1220 for transmitting parameters for sidelink-specific consistent LBT failure detection to the user equipment and a receiver 1230 for receiving a sidelink-specific consistent LBT failure detected using the parameters received from the user equipment.

According to an embodiment, the transmitter 1220 may transmit the parameters for sidelink-specific consistent LBT failure detection via RRC signaling.

According to an embodiment, the parameters may include at least one of followings: information about a sidelink LBT failure detection timer (e.g., SL-lbt-FailureDetectionTimer) and information about a sidelink LBT failure instance maximum count (e.g., SL-lbt-FailureInstanceMaxCount). The sidelink LBT failure detection timer may refer to a timer or a timer value which operates to detect an LBT failure while the sidelink is performing the LBT operation. The sidelink LBT failure instance maximum count may be a value associated with the maximum number of failure instances when the user equipment performs the LBT on the sidelink and then fails.

The user equipment may detect a sidelink-specific consistent LBT failure using the parameters. For example, the user equipment may perform the sidelink-specific consistent LBT failure detection independent of the type of sidelink cast. The user equipment may detect a sidelink-specific consistent LBT failure without distinguishing whether the sidelink is unicast, groupcast, or broadcast. Furthermore, the user equipment may detect a sidelink-specific consistent LBT failure independent of any other sidelink types.

The sidelink-specific consistent LBT failure detection may be performed in a sidelink resource pool or resource block set-specific manner. For example, the sidelink-specific consistent LBT failure detection may be performed according to the sidelink resource pool configured in the user equipment. As another example, the user equipment may also detect a sidelink-specific consistent LBT failure according to the sidelink resource block set configured in the user equipment.

Specifically, for example, upon receiving a sidelink-specific LBT failure indication from a lower layer, the user equipment may start or restart the sidelink LBT failure detection timer. Thereafter, the user equipment may increase a count for sidelink LBT failure detection by 1. If the count for sidelink LBT failure detection is greater than or equal to the maximum number of sidelink LBT failure instances, the user equipment may trigger a sidelink-specific consistent LBT failure. The above operation may be performed in a MAC entity of the user equipment.

For example, the receiver 1230 may receive from the user equipment information indicating that a sidelink-specific consistent LBT failure has been detected. As an example, the receiver 1230 may receive a MAC control element from the user equipment, the MAC control element containing resource identification information about a resource where the sidelink-specific consistent LBT failure occurred. The resource identification information may include information indicating a sidelink resource pool or a set of sidelink resource blocks. As another example, the receiver 1230 may receive from the user equipment, via an uplink control channel or an uplink data channel, the resource identification information if the sidelink-specific consistent LBT failure occurs.

In the case where the user equipment selects a radio resource for sidelink communications in resource allocation mode 2, the user equipment may perform a resource pool selection or reselection operation if the sidelink-specific consistent LBT failure is detected in the selected radio resource. That is, the user equipment may reselect a radio resource pool to reduce the probability of the sidelink-specific consistent LBT failure if the sidelink-specific consistent LBT failure is detected in a specific radio resource pool.

In addition, the controller 1210 controls the overall operation of the base station 1200 in effectively processing consistent LBT failures in shared spectrum sidelink communications necessary to perform the disclosure described above.

Furthermore, the transmitter 1120 and the receiver 1130 are used to transmit and receive signals, messages, and data to and from another user equipment or core network entity necessary to perform the embodiments described above.

The foregoing embodiments of the disclosure may be supported by standard documents of at least one of the IEEE 802 system, the 3GPP system, and the 3GPP2 system, all of which are radio (or wireless) access systems. That is, steps, elements, or portions not described in embodiments of the disclosure for the sake of clearly describing the spirit of the disclosure may be supported by the standard documents. For all terms used herein, reference may be made to the standard documents.

The foregoing embodiments of the disclosure may be implemented using a variety of means. For example, embodiments of the disclosure may be implemented using hardware, firmware, software, or any combination thereof.

In case that the disclosure is implemented using hardware, the methods according to embodiments of the disclosure may be realized using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

In case that the disclosure is implemented using firmware or software, the methods according to embodiments of the disclosure may be implemented in the form of devices, processes, functions, or the like which perform the functions or operations described above. Software codes may be stored in a memory unit to be executed by a processor. The memory unit may be located inside or outside of the processor and may exchange data with the processor by a variety of known means.

The terms, such as "system", "processor", "controller", "element", "module", "interface", "model", or "unit", used herein may generally refer to computer-related entity hardware, a combination of hardware and software, software, or software in execution. For example, the above-described elements may be at least one selected from, but are not limited to, a process, a processor, a controller, a control processor, an entity, an execution thread, a program, and a computer. For example, both an application being executed by the controller or processor and the controller or processor may be an element. One or more elements may reside in at least one of a process and an execution thread. An element may be located in a single device (e.g., a system or a computing device) or may be distributed across two or more devices.

The foregoing descriptions have been provided to illustrate certain principles of the disclosure by way of example. A person having ordinary knowledge in the technical field to which the disclosure pertains could make various modifications and variations without departing from the essential features of the principles of the disclosure. In addition, the foregoing embodiments shall be interpreted as being illustrative, while not being limitative, of the principles and scope of the disclosure. The scope of protection of the disclosure shall be interpreted in accordance with the appended Claims, and all technical ideas equivalent thereto shall be understood to be included in the scope of protection of the disclosure.

### CROSS-REFERENCE TO RELATED APPLICATION

This application claims priority under 35 U.S.C. §119 (a) of the United States Patent Act to Korean Patent Application Nos. 10-2022-0095660, filed on August 1, 2022, and 10-2023-0094081, filed on July 19, 2023, all of which are hereby incorporated by reference for all purposes as if fully set forth herein. In addition, when this application also claims priority for countries other than the United States for the same reason as above, all of the contents of the above-listed applications are hereby incorporated by reference.

## Claims

1. A sidelink communication method over an unlicensed band by user equipment, the method comprising:
configuring parameters for sidelink-specific consistent listen-before-talk (LBT) failure detection;
detecting a sidelink-specific consistent LBT failure using the parameters; and
transmitting the sidelink-specific consistent LBT failure to a base station.

2. The sidelink communication method of claim 1, wherein the parameters comprise at least one of information about a sidelink LBT failure detection timer (e.g., SL-Ibt-FailureDetectionTimer) or information about a sidelink LBT failure instance maximum count (e.g., SL-lbt-FailureInstanceMaxCount).

3. The sidelink communication method of claim 1, wherein the operation of detecting the sidelink-specific consistent LBT failure is configured to be performed independent of the type of sidelink cast.

4. The sidelink communication method of claim 1, wherein the operation of detecting the sidelink-specific consistent LBT failure is performed in a sidelink resource pool or resource block set-specific manner.

5. The sidelink communication method of claim 1, wherein the operation of detecting the sidelink-specific consistent LBT failure comprises:
if a sidelink-specific LBT failure indication is received from a lower layer, starting or restarting the sidelink LBT failure detection timer and increasing a count for sidelink LBT failure detection by 1; and
if the count for sidelink LBT failure detection is greater than or equal to a maximum number of sidelink LBT failure instances, triggering the sidelink-specific consistent LBT failure.

6. The sidelink communication method of claim 1, wherein the operation of transmitting the sidelink-specific consistent LBT failure to the base station comprises transmitting a MAC control element containing resource identification information about a resource in which the sidelink-specific consistent LBT failure has occurred.

7. The sidelink communication method of claim 1, further comprising, if the resource in which the sidelink-specific consistent LBT failure has occurred is present in a resource pool selected by the user equipment in sidelink resource allocation mode 2,
selecting or reselecting the resource pool.

8. A sidelink communication method over an unlicensed band by a base station, the sidelink communication method comprising:
transmitting parameters for sidelink-specific consistent listen-before-talk (LBT) failure detection to user equipment; and
receiving a sidelink-specific consistent LBT failure detected using the parameters from the user equipment.

9. The sidelink communication method of claim 8, wherein the parameters comprise at least one of information about a sidelink LBT failure detection timer (e.g., SL-Ibt-FailureDetectionTimer) or information about a sidelink LBT failure instance maximum count (e.g., SL-Ibt-FailureInstanceMaxCount).

10. The sidelink communication method of claim 8, wherein the sidelink-specific consistent LBT failure is established to be performed independent of the type of sidelink cast, and is performed in a sidelink resource pool or resource block set-specific manner.

11. The sidelink communication method of claim 8, wherein the sidelink-specific consistent LBT failure is received on a MAC control element containing resource identification information about a resource in which the sidelink-specific consistent LBT failure has occurred.

12. User equipment performing sidelink communications over an unlicensed band, the user equipment configuring parameters for sidelink-specific consistent listen-before-talk (LBT) failure detection, and comprising:
a controller which detects a sidelink-specific consistent LBT failure using the parameters; and
a transmitter which transmits the sidelink-specific consistent LBT failure to a base station.

13. The user equipment of claim 12, wherein the parameters comprise at least one of information about a sidelink LBT failure detection timer (e.g., SL-Ibt-FailureDetectionTimer) or information about a sidelink LBT failure instance maximum count (e.g., SL-lbt-FailureInstanceMaxCount).

14. The user equipment of claim 12, wherein the controller detects the sidelink-specific consistent LBT failure independent of the type of sidelink cast.

15. The user equipment of claim 12, wherein the controller detects the sidelink-specific consistent LBT failure in a sidelink resource pool or resource block set-specific manner.

16. The user equipment of claim 12, wherein the controller:
if a sidelink-specific LBT failure indication is received from a lower layer, starts or restarts the sidelink LBT failure detection timer and increases a count for sidelink LBT failure detection by 1; and
if the count for sidelink LBT failure detection is greater than or equal to a maximum number of sidelink LBT failure instances, triggers the sidelink-specific consistent LBT failure.

17. The user equipment of claim 12, wherein the transmitter transmits a MAC control element containing resource identification information about a resource in which the sidelink-specific consistent LBT failure has occurred.

18. The user equipment of claim 12, further performing, if the resource in which the sidelink-specific consistent LBT failure has occurred is present in a resource pool selected by the user equipment in sidelink resource allocation mode 2,
an operation of selecting or reselecting the resource pool.
